# EUROPÄISCHE PATENTSCHRIFT

(11) **EP 2 469 689 B1**
(45) Veröffentlichungstag und Bekanntmachung des Hinweises auf die Patenterteilung: **21.03.2018**
(21) Anmeldenummer: 11009805.0
(22) Anmeldetag: 13.12.2011
(51) Int. Cl.: H02K 9/14, H02K 11/33

(54) **Elektrischer Antrieb**
Electric drive
Entraînement électrique

(30) Priorität: 24.12.2010 DE 102010055869
(43) Veröffentlichungstag der Anmeldung: 27.06.2012
(73) Patentinhaber: Schneider Electric Automation GmbH, 97828 Marktheidenfeld (DE)
(72) Erfinder: Jess, Ralf, Dipl.-Ing., 77955 Ettenheim (DE)
(74) Vertreter: Huwer, Andreas

(56) Entgegenhaltungen:
- DE-A1- 10 119 734
- DE-A1- 10 326 297
- DE-A1-102005 032 967
- US-A- 4 831 294

## Beschreibung

Die Erfindung betrifft einen elektrischen Antrieb nach dem Oberbegriff von Anspruch 1.

Ein derartiger elektrischer Antrieb ist aus DE 103 26 297 A1 bekannt. Er weist einen elektronisch kommutierten Elektromotor auf, welcher mit dem Steuer- und Logikmodul als integrierte Baugruppe ausgestaltet ist. Das Steuer- und/oder Logikmodul umfasst eine auf einer ersten Leiterplatte angeordnete Endstufe zur Ansteuerung der Motorwicklung, eine mit der Endstufe in Steuerverbindung stehende Kommutierungselektronik, welche die zur Ansteuerung der Endstufe benötigten Kommutierungssingnale generiert, und auf einer zweiten Leiterplatte angeordnete Hall-Sensoren zur Erfassung der Rotorposition. Eine der Leiterplatten ist in einem Gehäuse untergebracht, das eine der Außenmantelfläche des Elektromotors zugewandte, durch einen Luftspalt von dieser beabstandete Innenwand und eine der Außenmantelfläche abgewandte Außenwand aufweist. Die erste Leiterplatte ist zwischen der ersten Innenwand und der ersten Außenwand angeordnet und verläuft parallel zur Rotationsachse des Elektromotors. In Umfangsrichtung des Rotors weist der Luftspalt beidseits Öffnungen auf

Nachteilig ist bei diesem Antrieb, dass in bestimmten Einbaulagen die Dauerleistung des Elektromotors begrenzt werden muss, damit das Steuer- und/oder Logikmodul durch die darin auftretende Verlustleistung und durch die Abwärme des Elektromotors nicht zu stark erwärmt wird. So hat es sich beispielsweise als thermisch ungünstig erwiesen, wenn die Leiterplatten an der Oberseite des Elektromotors angeordnet sind, weil dann die von der an den Leiterplatten auftretenden Verlustleistung erwärmte Umgebungsluft nur schlecht abströmen kann. Außerdem werden die Leiterplatten dann von der vom Elektromotor erwärmten Luft angeströmt, was die Temperatur der Leiterplatten zusätzlich erhöht. Daher werden die Leiterplatten bei dieser Einbaulage nur schlecht durch Konvektionsluft gekühlt. Bei bestimmten Anwendungen ist es jedoch aus Platzgründen oder aus Gründen der Zugänglichkeit der seitlich am Elektromotor befindlichen elektrischen Anschlüssen oder Stecker erwünscht, den Antrieb so einzubauen, dass die dem Elektromotor abgewandte Flachseite der Leiterplatte nach oben weist. Es besteht zwar die Möglichkeit, das Steuer- und/oder Logikmodul mit Hilfe eines Lüfters zu kühlen. Dies ist jedoch relativ aufwändig und erfordert zusätzlichen Bauraum.

Die DE 10 2005 032 967 A1 offenbart einen elektrischen Antrieb mit einem einen Stator und einen Rotor aufweisenden Elektromotor und mit einem Steuer- und/oder Logikmodul für den Elektromotor, das eine erste Leiterplatte und eine zweite Leiterplatte aufweist, die parallel zur Rotationsachse des Rotors angeordnet sind. Die erste Leiterplatte überdeckt eine erste Außenmantelfläche des Stators und die zweite Leiterplatte eine zweite Außenmantelfläche des Stators. Das Gehäuse des Antriebs weist einen ersten Gehäuseabschnitt mit einer der ersten Außenmantelfläche zugewandten ersten Innenwand und eine dieser abgewandten ersten Außenwand auf Die erste Leiterplatte ist zwischen der ersten Innenwand und der ersten Außenwand angeordnet. Zwischen der ersten Innenwand und der ersten Außenmantelfläche ist ein erster Luftspalt gebildet. Das Gehäuse weist ferner einen quer zur ersten Leiterplatte angeordneten zweiten Gehäuseabschnitt mit einer der zweiten Außenmantelfläche zugewandten zweiten Innenwand und eine dieser abgewandten zweiten Außenwand auf. Die zweite Leiterplatte ist zwischen der zweiten Innenwand und der zweiten Außenwand quer zur ersten Leiterplatte angeordnet. Zwischen der zweiten Innenwand und der zweiten Außenmantelfläche ist ein zweiter Luftspalt gebildet. Zwischen den Leiterplatten ist eine Durchtrittsöffnung für Kühlluft vorgesehen.

Es besteht deshalb die Aufgabe, einen elektrischen Antrieb der eingangs genannten Art zu schaffen, beidem dem das Steuer- und/oder Logikmodul in unterschiedlichen Einbaulagen des Antriebs auf einfache Weise gekühlt werden kann.

Erfindungsgemäß wird diese Aufgabe mit den Merkmalen des Anspruchs 1 gelöst.

In Vorteilhafter Weise ist es dadurch möglich, den Elektromotor bei horizontal ausgerichteter Rotationsachse in vier um seine Rotationsachse zueinander verdrehten Einbaulagen jeweils so anzuordnen, dass eine der beiden Leiterplatten in einer Vertikalebene angeordnet ist, so dass die durch die an dieser Leiterplatte auftretende Verlustwärme erwärmte Luft im Wesentlichen senkrecht nach oben aufsteigen und somit die Leiterplatte bzw. die darauf befindlichen elektrischen Bauelemente des Steuer- und/oder Logikmoduls wirkungsvoll kühlen kann. Da die Verlustwärme auf mindestens zwei in Umfangsrichtung des Elektromotors zueinander versetzte Leiterplatten verteilt wird, reduziert sich die Erwärmung der Leiterplatten entsprechend. Somit kann der Elektromotor in allen vier Einbaulagen jeweils mit seiner maximalen Dauerleistung betrieben werden.

Da die Durchtrittsöffnung in Axialrichtung des Rotors randoffen ausgestaltet ist, ergibt sich in den Luftspalten ein geringer Strömungswiderstand für die Konvektionsluft.

Wenn die erste Leiterplatte und die zweite Leiterplatte etwa orthogonal zueinander angeordnet sind, kann auch bei Einbaulagen, bei denen weder die erste Leiterplatte noch die zweite Leiterplatte in einer Vertikalebene angeordnet sind, eine wirkungsvolle Kühlung der Leiterplatten bzw. der darauf befindlichen elektrischen Bauelemente des Steuer- und/oder Logikmoduls erreicht werden, weil bei horizontal angeordneter Rotationsachse des Elektromotors der Neigungswinkel zwischen den Leiterplatten und einer Horizontalebene jeweils mindestens 45° beträgt.

Da die Leiterplatten hinterlüftet sind, können sie beidseitig mit einem Luftstrom gekühlt werden. Dadurch kann die an die Leiterplatten auftretende Verlustleistung noch besser abgeführt werden. Die Luftspalte erstrecken sich bevorzugt flächig zumindest über einen Teilbereich der ihnen jeweils zugeordneten Leiterplatte. Durch den Luftspalt ist die betreffende Leiterplatte außerdem thermisch gegen den Elektromotor isoliert, wodurch die Gefahr, dass der Elektromotor die Leiterplatten und die darauf befindlichen elektrischen Bauelement erwärmt, reduziert wird.

In den Gehäuseabschnitten sind die Leiterplatten und die darauf befindlichen elektrischen Bauelemente des Steuer- und/oder Logikmoduls vor Verschmutzung, Feuchtigkeit und mechanischer Beschädigung geschützt. Die Gehäuseabschnitte bestehen bevorzugt aus einem gut wärmeleitenden Werkstoff, insbesondere aus Aluminium, der wärmeleitend mit den Leiterplatten verbunden ist. Durch die in den Gehäuseabschnitten vorgesehene Durchtrittsöffnung hindurch kann bei unterschiedlichen Einbaulagen des elektrischen Antriebs Kühlluft strömen. Dadurch kann die im Steuer- und Logikmodul auftretende Verlustwärme noch besser an die Umgebungsluft abgeleitet werden. Die Durchtrittsöffnung ist bevorzugt in gerader Verlängerung eines der Luftspalte angeordnet. Dadurch kann der in den Gehäuseabschnitten zur Verfügung stehende Bauraum besonders gut für die Unterbringung der Leiterplatten genutzt werden.

Die Durchtrittsöffnung kann schlitzförmig ausgebildet sein und sich in Axialrichtung des Elektromotors vorzugsweise nur über einen Teil der Länge der Gehäuseabschnitte erstreckten. Durch diese Maßnahme wird bei unterschiedlichen Einbaulagen des elektrischen Antriebs jeweils eine effektive Abführung der Verlustwärme ermöglicht und dennoch können die Leiterplatten an einer in gerader Verlängerung der Durchtrittsöffnung befindlichen Stelle auf einfache Weise elektrisch miteinander verbunden werden, insbesondere mittels einer entsprechenden Steckkupplung.

Bei einer vorteilhaften Ausgestaltung der Erfindung weist die erste Leiterplatte einen Durchbruch oder eine randoffene Aussparung aufweist, und dass die Durchtrittsöffnung diesen Durchbruch oder diese Aussparung durchsetzt. Somit kann der beidseits der Durchtrittsöffnung in dem ersten Gehäuseabschnitt angeordnete Bauraum für die erste Leiterplatte genutzt werden.

Vorzugsweise weist die erste Leiterplatte einen den Durchbruch oder die Aussparung begrenzenden stegförmigen Leiterplattenabschnitt auf, welcher der zweiten Leiterplatte zugewandt und über eine Steckkupplung mit dieser elektrisch verbunden ist. Für die elektrische Verbindung zwischen den Leiterplatten steht dann mehr Bauraum zur Verfügung.

Bevorzugt weist das Gehäuse einen dritten Gehäuseabschnitt auf, der quer zur Rotationsachse des Rotors angeordnet und einer Stirnwand des Elektromotors zugewandt ist, wobei der dritte Gehäuseabschnitt L-förmig mit dem ersten Gehäuseabschnitt und/oder dem zweiten Gehäuseabschnitt verbunden ist. Die im Steuer-und/oder Logikmodul auftretende Verlustwärme kann dann über eine noch größere Oberfläche verteilt abgeführt werden. Der dritte Gehäuseabschnitt weist bevorzugt mindestens eine Befestigungsstelle auf, die direkt oder indirekt über mindestens ein Befestigungselement, wie z.B. eine Schraube, lösbar mit dem Elektromotor verbindbar ist. Zwischen dem dritten Gehäuseabschnitt und der Stirnwand des Elektromotors kann eine Wärmeisolationsschicht angeordnet sein, mittels welcher das Gehäuse thermisch gegen den Elektromotor isoliert ist, damit die vom Elektromotor erzeugte Verlustwärme möglichst nicht auf das Steuer-und/oder Logikmodul übertragen wird.

Bei einer anderen vorteilhaften Ausführungsform der Erfindung weist das Gehäuse einen dritten Gehäuseabschnitt auf, der quer zur Rotationsachse des Rotors angeordnet und als Motorflansch ausgestaltet ist, der von einer Motorwelle durchsetzt ist, auf welcher der Rotor angeordnet ist, wobei der dritte Gehäuseabschnitt L-förmig mit dem ersten Gehäuseabschnitt und/oder dem zweiten Gehäuseabschnitt verbunden ist. Diese Ausführungsform der Erfindung wird besonders bei kleineren Elektromotoren bevorzugt. Dabei können der erste und zweite Gehäuseabschnitt über den dritten Gehäuseabschnitt bzw. ein damit verbundenes Trägerteil gekühlt werden.

Bei einer vorteilhaften Ausgestaltung der Erfindung ist mindestens einer der Gehäuseabschnitte von einem Luftdurchtrittskanal durchsetzt. Über den Gehäuseabschnitt kann dadurch noch effektiver Wärme von der in dem Gehäuse befindlichen Leiterplatte bzw. den darauf angeordneten elektronischen Bauelementen an die Umgebungsluft abgeführt werden. Der elektrische Antrieb wird bevorzugt derart montiert, dass der Luftdurchtrittskanal mit seiner Längserstreckung in vertikale Richtung orientiert ist oder zumindest eine Komponente aufweist, die in vertikaler Richtung verläuft. Dadurch kann in dem Luftdurchtrittskanal eine Kaminwirkung auftreten, die eine nochbessere Wärmeübertragung von den an den Luftdurchtrittskanal angrenzenden Gehäuse-Wänden an die Umgebungsluft ermöglicht.

Der Luftdurchtrittskanal verläuft bevorzugt in Axialrichtung des Rotors. Der Luftdurchtrittskanal erreicht dann seine maximale Kühlwirkung, wenn der elektrische Antrieb mit der Rotationsachse des Elektromotors in vertikaler Richtung angeordnet ist. Der elektrische Antrieb kann dann sogar in der besonders ungünstigen vertikalen Einbaulage, bei welcher die Motorwelle des Elektromotors nach unten zeigt und somit nahezu die gesamte Abwärme des Elektromotors auf das Gehäuse des Steuer- und Logikmoduls auftrifft, ausreichend gekühlt werden.

Vorteilhaft ist, wenn der Luftdurchtrittskanal in einem von dem ersten Gehäuseabschnitt entfernten Randbereich des zweiten Gehäuseabschnitts angeordnet ist. Der in dem Gehäuse vorhandene Bauraum kann dann besonders gut für die Unterbringung des Steuer- und/oder Logikmoduls genutzt werden. In den Verbindungsbereichen zwischen aneinander angrenzenden Gehäuseabschnitten können Kabel oder dergleichen elektrische Verbindungen angeordnet sein. Es ist aber auch denkbar, dass der Luftdurchtrittskanal den zweiten Gehäuseabschnitt an einer anderen Stelle durchsetzt und/oder dass mindestens ein Gehäuseabschnitt oder das gesamte Gehäuse mehrere Luftdurchtrittskanäle aufweist. Vorteilhaft ist beispielsweise, wenn der Luftdurchtrittskanal zwischen der ersten Leiterplatte und der zweiten Leiterplatte angeordnet ist. Der Luftdurchtrittskanal kann dann beide Leiterplatten gleichermaßen kühlen.

Bei einer vorteilhaften Ausgestaltung der Erfindung weist das Steuer- und/oder Logikmodul an einer dem Elektromotor abgewandten Rückseitenwand des dritte Gehäuseabschnitts elektrische Anschlüsse zum lösbaren Verbinden mit Stromversorgungs-, Steuerungs- und/oder Kommunikationsleitungen auf. Aufgrund der Doppel-L-Form des Gehäuses kann der Antrieb bei unterschiedlichen Einbausituationen jeweils so eingebaut werden, dass sich die Anschlüsse in ein einer montagefreundlichen Lage befinden, das Gehäuse aber dennoch ausreichend mit Luft gekühlt wird.

Die vorstehend genannte Aufgabe kann bei einem elektrischen Antrieb mit einem einen Stator und einen Rotor aufweisenden Elektromotor und mit einem in einem Gehäuse angeordneten Steuer- und Logikmodul für den Elektromotor, wobei das Steuer- und/oder Logikmodul eine Leiterplatte aufweist, die im Wesentlichen derart parallel zur Rotationsachse des Rotors angeordnet ist, dass sie eine Außenmantelfläche des Stators überdeckt, wobei die Leiterplatte zwischen einer der Außenmantelfläche zugewandten Innenwand und einer Außenwand eines ersten Gehäuseabschnitts des Gehäuses angeordnet ist, auch dadurch gelöst werden, dass das Gehäuse einen flächigen zweiten Gehäuseabschnitt aufweist, der wärmeleitend mit dem ersten Gehäuseabschnitt verbundenen und im Wesentlichen derart parallel zur Rotationsachse des Rotors und quer zur Leiterplatte angeordnet ist, dass er eine zweite Außenmantelfläche des Stators überdeckt.

Der zweite Gehäuseabschnitt bewirkt dabei eine Vergrößerung der Oberfläche des Gehäuses, wodurch die im Logikmodul auftretende Verlustleistung besser an die Umgebung abgeleitet wird. Da der zweite Gehäuseabschnitt quer zur Leiterplatte und somit auch quer zum ersten Gehäuseabschnitt angeordnet ist, können die Leiterplatte und die darauf befindlichen Bauelemente bei unterschiedlichen Einbaulagen des Antriebs jeweils wirkungsvoll gekühlt werden.

Vorteilhaft ist, wenn zwischen der Innenwand des ersten Gehäuseabschnitts und der ersten Außenmantelfläche ein erster Luftspalt gebildet ist, der in Umfangsrichtung des Stators beidseits Öffnungen für den Durchtritt von Konvektionsluft aufweist, und/oder dass zwischen dem flächigen zweiten Gehäuseabschnitt und der zweiten Außenmantelfläche ein zweiter Luftspalt gebildet ist, der in Umfangsrichtung des Stators beidseits des zweiten Gehäuseabschnitts Öffnungen für den Durchtritt von Konvektionsluft aufweist. Durch diese Hinterlüftung kann die an die Leiterplatten auftretende Verlustleistung noch besser abgeführt werden.

Zweckmäßigerweise ist zwischen dem ersten Gehäuseabschnitt und dem zweiten Gehäuseabschnitt eine Durchtrittsöffnung für Kühlluft gebildet. Die Kühlluft kann dadurch bei unterschiedlichen Einbaulagen des Antriebs jeweils auf kurzen Wegen an dem Gehäuse vorbeiströmen, wodurch die Kühlwirkung zusätzlich verbessert wird.

Das Gehäuse weist bevorzugt einen dritten Gehäuseabschnitt auf, der quer zur Rotationsachse des Rotors angeordnet ist und L-förmig mit dem ersten Gehäuseabschnitt und/oder dem zweiten Gehäuseabschnitt verbunden ist.

Bei einer Weiterbildung der Erfindung ist die erste Außenwand derart thermisch leitend mit der ersten Innenwand verbunden ist, dass zwischen der ersten Außenwand und der ersten Innenwand ein erster thermischer Widerstand vorhanden ist, wobei die zweite Außenwand derart thermisch leitend mit der zweiten Innenwand verbunden ist, dass zwischen der zweiten Außenwand und der zweiten Innenwand ein zweiter thermischer Widerstand vorhanden ist, wobei auf der ersten Leiterplatte eine erste elektrische Schaltung und auf der zweiten Leiterplatte eine zweite elektrische Schaltung vorgesehen sind, wobei die elektrischen Schaltungen für unterschiedliche, maximal zulässige Betriebstemperaturen ausgelegt sind, und wobei die Leiterplatte, auf der die elektrische Schaltung mit der geringeren maximal zulässigen Betriebstemperatur vorgesehen ist, hinter der Außenwand angeordnet ist, welche den höheren thermischen Widerstand zu der ihr zugeordneten Innenwand hat.

Hinter der Außenwand, die über den geringeren thermischen Widerstand an die ihr zugeordnete Innenwand angekoppelt ist, kann dann eine Leistungskomponenten aufweisende erste elektrische Schaltung, wie zum Beispiel eine Endstufe zur Ansteuerung der Motorwicklung, angeordnet sein. Diese elektrische Schaltung kann für die höhere maximal zulässige Betriebstemperatur dimensioniert sein. Hinter der anderen Außenwand kann eine zweite elektrische Schaltung angeordnet sein, die eine geringere Verlustleistung erzeugt als die erste elektrische Schaltung und die für die geringere maximal zulässige Betriebstemperatur dimensioniert ist, wie zum Beispiel eine Schnittstellenschaltung für einen Kommunikationsbus. Die erste Innenwand ist bevorzugt gut wärmeleitend und insbesondere einstückig mit der zweiten Innenwand verbunden, so dass die von der elektrischen Schaltung mit der höheren Verlustleistung erzeugte Abwärme über beide Innenwände und die dieser Schaltung zugeordnete Außenwand großflächig an die Umgebung abgeführt werden kann. Da die andere Außenwand über einen höheren thermischen Widerstand an die Innenwände angekoppelt ist, ergibt sich hinter dieser Außenwand und somit an der elektrischen Schaltung, die für die geringere maximal zulässige Betriebstemperatur dimensioniert ist, eine geringere Betriebstemperatur.

Erwähnt werden soll noch, dass eine der Leiterplatten als auswechselbares Modul ausgeführt sein kann. Dabei ist es sogar möglich, dass für diese Leiterplatte mehrere verschiedene Varianten bereitgestellt werden, die wahl- oder wechselweise mit restlichen Steuer- und/oder Logikmodul verbindbar sind. Diese Varianten können beispielsweise Kommunikationseinrichtungen für unterschiedliche Feldbusse umfassen.

Nachfolgend sind Ausführungsbeispiele der Erfindung anhand der Zeichnung näher erläutert. Es zeigt:
- Fig. 1: eine Ansicht auf die Vorderseite eines ersten Ausführungsbeispiels eines elektrischen Antriebs, der einen Elektromotor und ein Steuer- und Logik-modul aufweist, wobei verdeckte Kanten eines Luftdurchtrittskanals strichliniert dargestellt sind,
- Fig. 2A und 2B: eine Ansicht auf die Vorderseite eines elektrischen Antriebs, wobei das Gehäuse für das Steuer- und Logikmodul geöffnet ist,

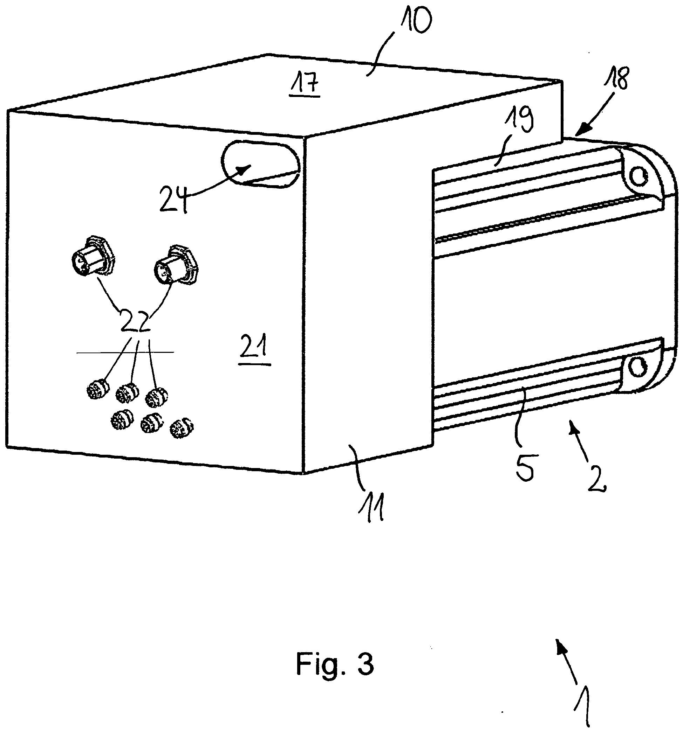

- Fig. 3: eine Ansicht auf die Rückseite des elektrischen Antriebs,
- Fig. 4: eine Längsseitenansicht des elektrischen Antriebs,
- Fig. 5: eine Vorderansicht des in einer ersten Einbaulage befindlichen elektrischen Antriebs,
- Fig. 6: eine Vorderansicht des in einer zweiten Einbaulage befindlichen elektrischen Antriebs,
- Fig. 7: eine Vorderansicht des in einer dritten Einbaulage befindlichen elektrischen Antriebs,
- Fig. 8: eine Vorderansicht des in einer vierten Einbaulage befindlichen elektrischen Antriebs,
- Fig. 9: eine Ansicht auf die Rückseite eines zweiten Ausführungsbeispiels des elektrischen Antriebs,
- Fig. 10: eine Vorderansicht einer Anordnung, die zwei elektrische Antriebe nebeneinander aufweist,
- Fig. 11: eine Darstellung ähnlich Fig. 10, wobei jedoch die Antriebe in unterschiedlichen Einbaulagen angeordnet sind, und
- Fig. 12: eine Vorderansicht einer Anordnung, die drei elektrische Antriebe nebeneinander aufweist.

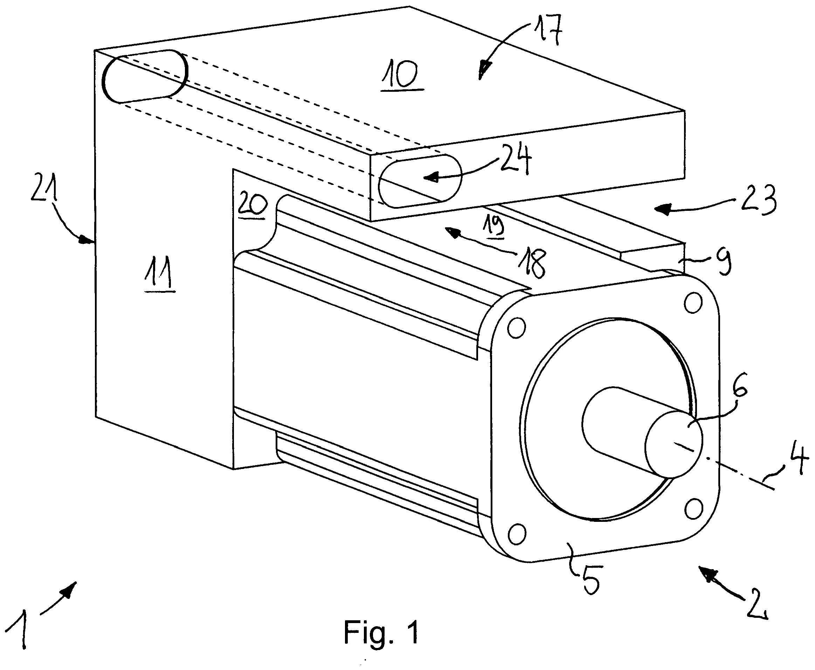

Ein in Fig.1 im Ganzen mit 1 bezeichneter elektrischer Antrieb hat einen elektronisch kommutierten Elektromotor 2 und ein Steuer- und Logikmodul 3 für den Elektromotor 2. Der Elektromotor 2 hat einen Stator 4 mit einer Motorwicklung und einen um eine Rotationsachse 4 drehbar am Stator 5 gelagerten Rotor mit einer Motorwelle 6. Der Elektromotor 2 kann beispielsweise ein Servomotor sein, der einen Stator mit einem weichmagnetischen Kern und einen permanentmagnetischen Rotor hat, an dessen Umfang eine Anzahl von abwechselnd in zueinander entgegen gesetzte Richtungen magnetisierten Magnetpolen angeordnet sind, die zum Erzeugen einer Drehbewegung über einen Luftspalt magnetisch mit dem Stator 4 zusammenwirken. Der Elektromotor 2 kann auch als Schrittmotor ausgestaltet sein.

Das Steuer- und/oder Logikmodul 3 umfasst eine Endstufe zur Ansteuerung der Motorwicklung, eine mit der Endstufe in Steuerverbindung stehende Kommutierungselektronik, welche die zur Ansteuerung der Endstufe benötigten Kommutierungssingnale generiert, Sensoren zur Bestimmung der Relativposition zwischen Stator und Rotor, einen Controller, mit dem Fahrprofile generiert werden können, eine Kommunikationsschnittstelle, wie zum Beispiel einen Feldbus, zum Verbinden des Steuer- und/oder Logikmoduls 3 mit einer übergeordneten Steuerung, ein erstes Netzteil zur Stromversorgung des Elektromotors aus einem Wechsel- oder Drehstromnetz, und ein zweites Netzteil, das zur Stromversorgung des Controllers und der Kommutierungselektronik dient. Das Steuer- und/oder Logikmodul 3 hat mehrere Leiterplatten 7, 8, die mit elektronischen Bauelementen bestückt sind, welche über Leiterbahnen miteinander verbunden sind.

Das Steuer- und Logikmodul 3 ist in einem Gehäuse angeordnet, das mit dem Elektromotor 2 eine integrierte Baugruppe bildet. Wie in Fig. 1 erkennbar ist, weist das Gehäuse drei Gehäuseabschnitte 9, 10, 11 auf. In einem ersten Gehäuseabschnitt 9 ist eine erste Leiterplatte 7 angeordnet, die sich etwa parallel zur Rotationsachse 4 des Elektromotors 2 erstreckt und mit ihrer Flachseite dem Elektromotor 2 zugewandt ist. Der erste Gehäuseabschnitt 9 hat eine dem Elektromotor 2 zugewandte erste Innenwand 12 und eine dem Elektromotor 2 abgewandte erste Außenwand 13, zwischen denen die erste Leiterpatte 7 angeordnet ist. Die erste Innenwand 12 und die erste Außenwand 13 verlaufen etwa parallel zur ersten Leiterpatte 7 und sind wärmeleitend mit dieser und/oder den darauf befindlichen elektronischen Bauelementen verbunden. Die erste Innenwand 12 ist durch einen ersten Luftspalt 14 von einer ihr zugewandten ersten Außenmantelfläche 14 des Stators 5 beabstandet. In Umfangsrichtung des Stators ist der erste Luftspalt 14 an beiden Enden offen. Ebenso zur Vorderseite des Elektromotors 2 hin.

In einem zweiten Gehäuseabschnitt 10 ist eine zweite Leiterplatte 8 angeordnet, die sich ebenfalls etwa parallel zur Rotationsachse 4 des Elektromotors 2 erstreckt und die orthogonal zur ersten Leiterplatte 7 ausgerichtet ist. Der zweite Gehäuseabschnitt 10 hat eine dem Elektromotor 2 zugewandte zweite Innenwand 16 und eine dem Elektromotor 2 abgewandte zweite Außenwand 17, zwischen denen die zweite Leiterpatte 8 angeordnet ist. Die zweite Innenwand 16 und die zweite Außenwand 17 verlaufen etwa parallel zur zweiten Leiterpatte 8 und sind wärmeleitend mit dieser und/oder den darauf befindlichen elektronischen Bauelementen verbunden. Die zweite Innenwand 16 ist durch einen zweiten Luftspalt 18 von einer ihr zugewandten zweiten Außenmantelfläche 19 des Stators 5 beabstandet. In Umfangsrichtung des Stators ist der zweite Luftspalt 18 an beiden Enden offen. Ebenso zur Vorderseite des Elektromotors 2 hin.

In einem dritten Gehäuseabschnitt 11 ist eine in der Zeichnung nicht näher dargestellte dritte Leiterplatte angeordnet, die sich in einer etwa normal zur Rotationsachse 4 des Elektromotors 2 verlaufenden Ebene erstreckt. Der dritte Gehäuseabschnitt 11 hat eine dem Elektromotor 2 zugewandte dritte Innenwand 20 und eine dem Elektromotor 2 abgewandte dritte Außenwand 21, zwischen denen die dritte Leiterpatte angeordnet ist. Die dritte Innenwand 20 und die dritte Außenwand 21 verlaufen etwa parallel zur dritten Leiterpatte und sind wärmeleitend mit dieser und/oder den darauf befindlichen elektronischen Bauelementen verbunden. An der dritten Außenwand 21 weist das Steuer- und Logikmodul elektrische Anschlüsse 22 zum lösbaren Verbinden mit Stromversorgungs-, Steuerungs- und/oder Kommunikationsleitungen auf

Die dritte Innenwand 20 ist über eine Wärmeisolationsschicht flächig mit einer Rückwand des Elektromotors 2 verbunden. Der dritte Gehäuseabschnitt 11 hat Befestigungsstellen, an denen er mit Hilfe von in der Zeichnung nicht näher dargestellten Schrauben, welche den Stator axial durchsetzen, lösbar mit der Rückwand bzw. dem Elektromotor 2 verbunden ist.

Der dritte Gehäuseabschnitt 11 ist in einer ersten, in Axialrichtung des Elektromotors 2 verlaufenden Längsmittelebene L-förmig mit dem ersten Gehäuseabschnitt 9 und in einer zweiten, ebenfalls in Axialrichtung des Elektromotors 2 verlaufenden, orthogonal zur ersten Längsmittelebene angeordneten Längsmittelebene L-förmig mit dem zweiten Gehäuseabschnitt 10 verbunden.

In den Fig. 1, 2A, 2B und 4 ist erkennbar dass zwischen dem ersten Gehäuseabschnitt 9 und dem zweiten Gehäuseabschnitt 10 eine schlitzartige Durchtrittsöffnung 23 für Kühlluft gebildet ist, die sich von dem vom dritten Gehäuseabschnitt 11 entfernten vorderen Ende des ersten Gehäuseabschnitts 10 zum dritten Gehäuseabschnitt 11 hin erstreckt. Die Durchtrittsöffnung 23 durchsetzt den ersten Gehäuseabschnitt 9 etwa normal zur Erstreckungsebene der ersten Leiterplatte 7.

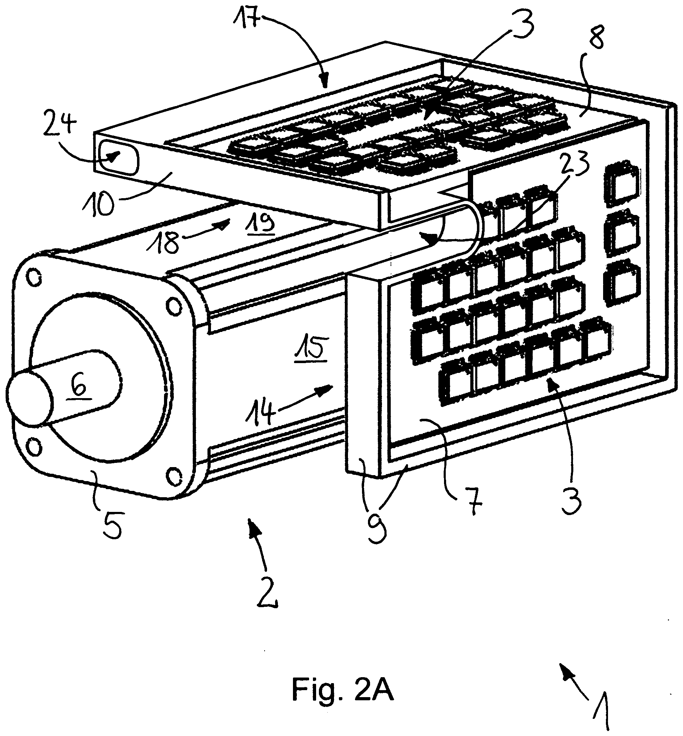

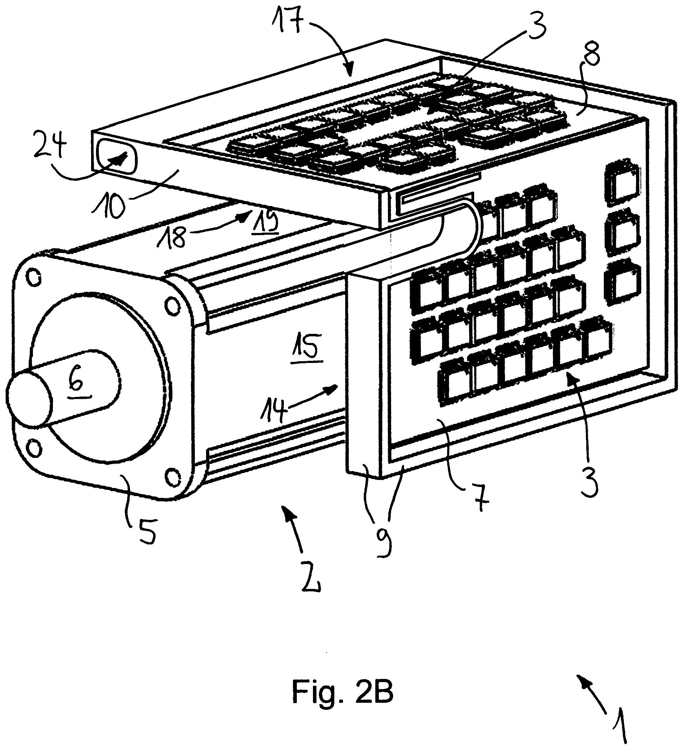

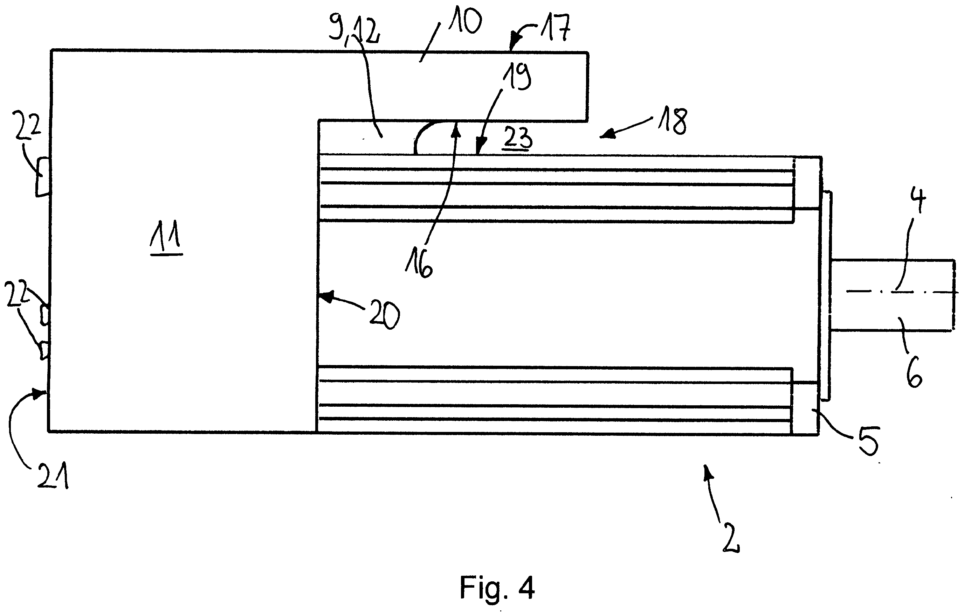

An ihrem dem dritten Gehäuseabschnitt 11 abgewandten vorderen Ende ist die Durchtrittsöffnung 23 randoffen ausgebildet. Die Durchtrittsöffnung 23 ist mit ihrer Längsachse etwa parallel zur Rotationsachse 4 des Rotors angeordnet und erstreckt sich die nur über einen Teil der Länge des zweiten Gehäuseabschnitts 10. In Fig. 2A, 2B und 4 ist außerdem erkennbar, dass die Durchtrittsöffnung 23 in gerader Verlängerung der zweiten Luftspalts 18 angeordnet ist und diesen fortsetzt.

Bei dem in Fig. 2B gezeigten Ausführungsbeispiel weist die erste Leiterplatte 7 einen schlitzförmigen, randoffenen Durchbruch auf, der von der Durchtrittsöffnung (23) des ersten Gehäuseabschnitts 10 durchsetzt wird. Der Durchbruch wird an einer seiner Längsränder durch einen stegförmigen Leiterplattenabschnitt 25 der erste Leiterplatte 7 begrenzt, der benachbart zur zweiten Leiterplatte 7 angeordnet und über eine in der Zeichnung nur schematisch dargestellte Steckkupplung 26 mit dieser elektrisch verbunden ist.

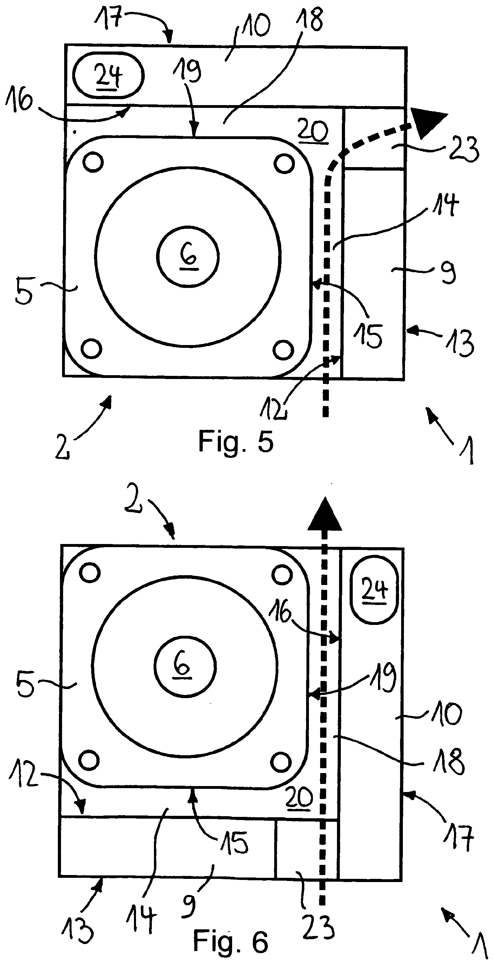

Wie in Fig. 5 bis 8 erkennbar ist, kann der Antrieb 1 in vier um jeweils 90° bezüglich seiner Rotationsachse 4 versetzten Einbaulagen angeordnet werden, in denen jeweils die erste Leiterplatten 7 oder die zweite Leiterplatten 8 bzw. der erste Gehäuseabschnitt 9 oder der zweite Gehäuseabschnitt 10 in einer Vertikalebene angeordnet ist. In einer ersten, in Fig. 5 gezeigten Einbaulage, bei welcher die Durchtrittsöffnung 23 am oberen Ende des ersten Gehäuseabschnitts 9 angeordnet ist, strömt Kühlluft, die durch den ersten Gehäuseabschnitt 9 erwärmt wird, durch den ersten Luftspalt 14 und die Durchtrittsöffnung 23 hindurch nach oben. Dabei wird der Luftstrom dadurch erzeugt, dass die Dichte der Kühlluft bei Erwärmung abnimmt und die Kühlluft somit aufsteigt. Durch den Luftstrom wird der erste Gehäuseabschnitt 9 rückseitig und oberseitig und der zweite Gehäuseabschnitt 10 unterseitig gekühlt. Ein weiterer, in der Zeichnung nicht näher dargestellter Kühlluftstrom strömt außenseitig an der ersten Außenwand 13 nach oben und kühlt diese.

In einer zweiten, in Fig. 6 gezeigten Einbaulage, bei welcher die Durchtrittsöffnung 23 an der Unterseite des Antriebs 1 angeordnet ist, strömt Kühlluft, die durch den zweiten Gehäuseabschnitt 10 erwärmt wird, durch die Durchtrittsöffnung 23 und den zweiten Luftspalt 18 hindurch nach oben. Dabei wird der erste Gehäuseabschnitt 9 seitlich und der zweite Gehäuseabschnitt 10 rückseitig gekühlt. Ein weiterer, in der Zeichnung nicht näher dargestellter Kühlluftstrom strömt außenseitig an der zweiten Außenwand 17 nach oben und kühlt diese.

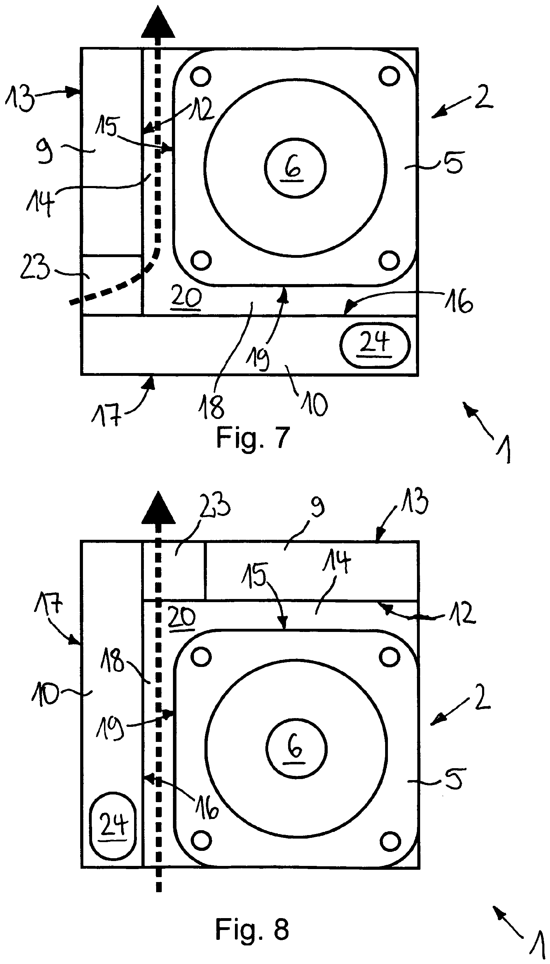

In einer dritten, in Fig. 7 gezeigten Einbaulage, bei welcher die Durchtrittsöffnung 23 am unteren Ende des ersten Gehäuseabschnitts 9 angeordnet ist, strömt Kühlluft, die durch den zweiten Gehäuseabschnitt 10 erwärmt wird, durch die Durchtrittsöffnung 23 und den ersten Luftspalt 14 hindurch nach oben. Dabei wird der erste Gehäuseabschnitt 9 rückseitig und unterseitig und der zweite Gehäuseabschnitt 10 oberseitig gekühlt. Ein weiterer, in der Zeichnung nicht näher dargestellter Kühlluftstrom strömt außenseitig an der ersten Außenwand 13 nach oben und kühlt diese.

In einer vierten, in Fig. 8 gezeigten Einbaulage, bei welcher die Durchtrittsöffnung 23 an der Oberseite des Antriebs 1 angeordnet ist, strömt Kühlluft, die durch den zweiten Gehäuseabschnitt 10 erwärmt wird, durch den zweiten Luftspalt 18 und die Durchtrittsöffnung 23 hindurch nach oben. Dabei wird der zweite Gehäuseabschnitt 9 rückseitig und der erste Gehäuseabschnitt 10 seitlich gekühlt. Ein weiterer, in der Zeichnung nicht näher dargestellter Kühlluftstrom strömt außenseitig an der zweiten Außenwand 17 nach oben und kühlt diese.

Der zweite Gehäuseabschnitt 10 ist von einem Luftdurchtrittskanal 24 durchsetzt, der parallel zur Rotationsachse 4 des Rotors verläuft. Wie in Fig. 1 besonders gut erkennbar ist, befindet sich der Luftdurchtrittskanal in einem von dem ersten Gehäuseabschnitt 9 entfernten Randbereich des zweiten Gehäuseabschnitts 10.

Der Luftdurchtrittskanal 24 hat Seitenwände, die in Umfangsrichtung unterbrechungsfrei um den Luftdurchtrittskanal 24 umlaufen. Die Seitenwände sind bevorzugt wärmeleitend mit der zweiten Leiterplatte 8 und/oder den darauf befindlichen elektronischen Bauelementen verbunden. Es ist aber auch denkbar, dass der Luftdurchtrittskanal 24 im Wesentlichen dazu dient, den ersten Gehäuseabschnitt 9 zu kühlen. In diesem Fall kann eine direkte, wärmeleitende Verbindung zwischen dem Luftdurchtrittskanal 24 und der zweiten Leiterplatte 8 entfallen.

Wenn der Antrieb 1 mit der Rotationsachse in vertikale Richtung angeordnet ist, tritt bei Erwärmung der in dem Luftdurchtrittskanal 24 befindlichen Luft ein Kamineffekt auf, der in dem Luftdurchtrittskanal 24 einen Luftstrom erzeugt, durch den der zweite Gehäuseabschnitt 10 gekühlt wird.

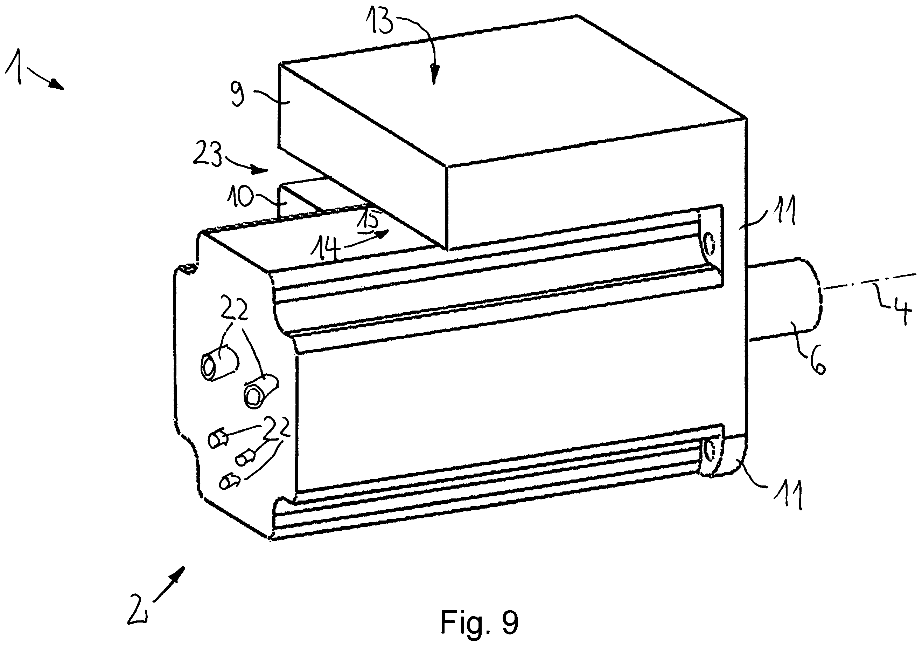

Wie in Fig. 9 erkennbar ist, kann der dritte Gehäuseabschnitt 11 auch als Motorflansch ausgestaltet sein, der von einer Motorwelle 6 durchsetzt ist, auf welcher der Rotor angeordnet ist. Auch bei dieser Ausgestaltung der Erfindung ist der dritte Gehäuseabschnitt 11 L-förmig mit dem ersten Gehäuseabschnitt 9 und/oder dem zweiten Gehäuseabschnitt 10 verbunden.

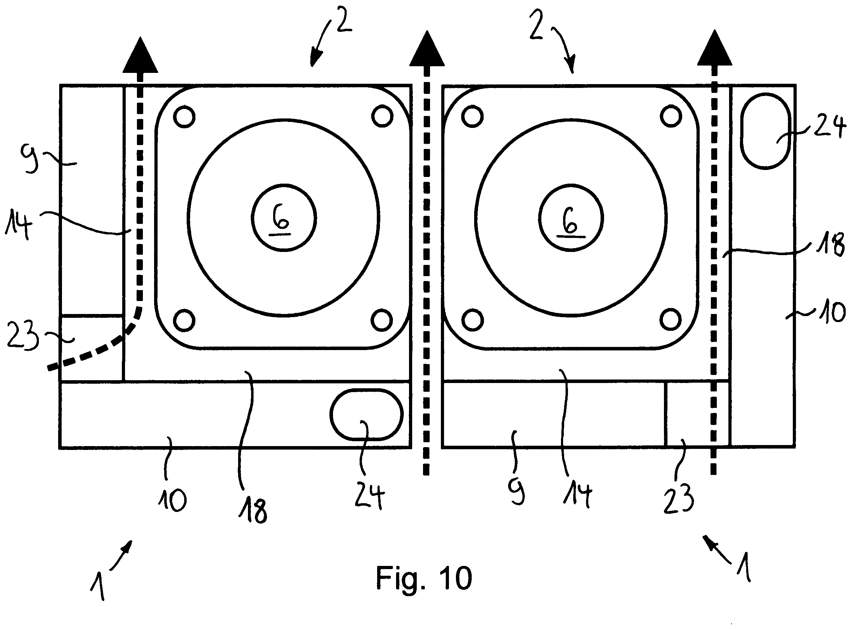

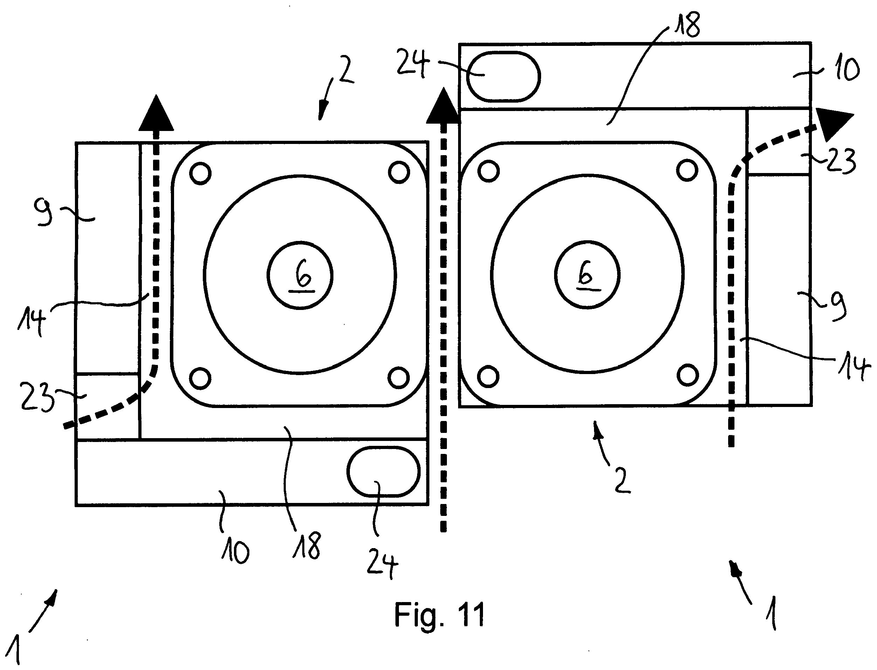

An der den Gehäuseabschnitten 9, 10 abgewandt gegenüberliegenden Seiten des Elektromotors 2 ist jeweils kein Gehäuseabschnitt angeordnet. Dadurch wird der elektrische Antrieb 1 an dieser Seite durch den Elektromotor 2 begrenzt. Wie in Fig. 10 und 11 erkennbar ist, ist es dadurch möglich, zwei der erfindungsgemäßen Antriebe 1 derart mit ihren Rotationsachsen 4 parallel zueinander anzuordnen, dass sich zwischen den Elektromotoren 2 kein Gehäuseabschnitt befindet. Dabei sind die Elektromotoren 2 bevorzugt durch einen Luftspalt voneinander beabstandet, durch den Konvektionsluft strömen kann. Die Rotationsachsen 4 der Elektromotoren 2 können also genauso dicht nebeneinander angeordnet werden, wie bei einem elektrische Antrieb 1, bei dem das Steuer- und Logikmodul in einem von den Elektromotoren getrennten Gehäuse angeordnet ist.

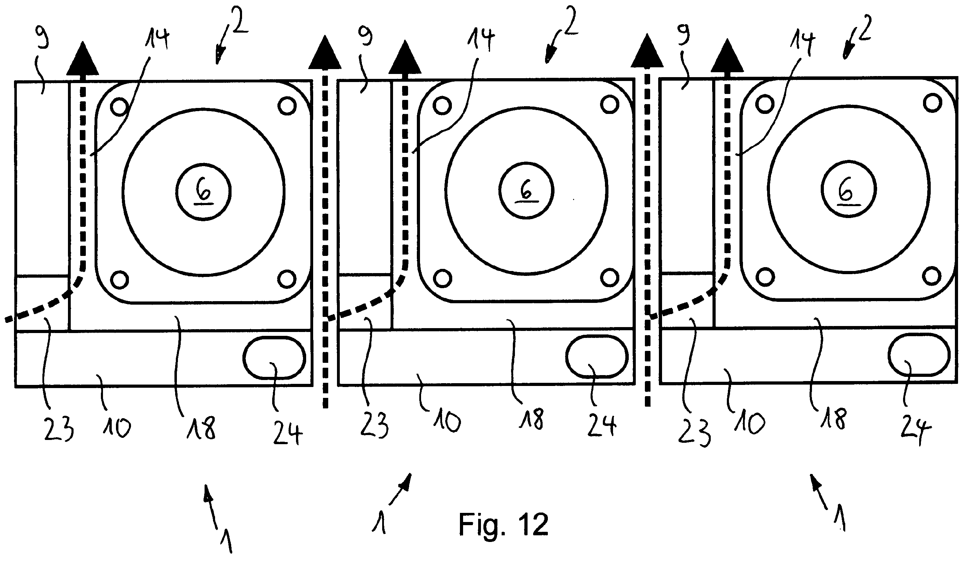

In Fig. 12 ist erkennbar, dass auch mehr als zwei Antriebe 1 mit ihren Rotationsachsen 4 parallel zueinander in einer Reihe nebeneinander angeordnet werden können. In diesem Fall ist zwischen zwei Elektromotoren 2 jeweils ein Gehäuseabschnitt 9, 10 angeordnet. Wenn zwischen den Antrieben 1 ein Luftspalt vorgesehen wird, können die zwischen den Elektromotoren 2 befindlichen ersten Gehäuseabschnitt 9 beidseits mit Konvektionsluft angeströmt werden.

## Patentansprüche

1. Elektrischer Antrieb (1) mit einem einen Stator und einen Rotor aufweisenden Elektromotor (2) und mit einem Steuer- und/oder Logikmodul (3) für den Elektromotor (2), das eine erste Leiterplatte (7) und eine zweite Leiterplatte (8) aufweist, die parallel zur Rotationsachse (4) des Rotors angeordnet sind, wobei die erste Leiterplatte (7) eine erste Außenmantelfläche (15) des Stators und die zweite Leiterplatte (8) eine zweite Außenmantelfläche (19) des Stators überdeckt mit einem Gehäuse, das einen ersten Gehäuseabschnitt (9) mit einer der ersten Außenmantelfläche (15) zugewandten ersten Innenwand (12) und eine dieser abgewandten ersten Außenwand (13) aufweist, wobei die erste Leiterplatte (7) zwischen der ersten Innenwand (12) und der ersten Außenwand (13) angeordnet ist, wobei zwischen der ersten Innenwand (12) und der ersten Außenmantelfläche (15) ein erster Luftspalt (14) gebildet ist, der in Umfangsrichtung des Stators für den Durchtritt von Konvektionsluft an beiden Enden offen ist, **dadurch gekennzeichnet dass** das Gehäuse einen quer zur ersten Leiterplatte (7) angeordneten zweiten Gehäuseabschnitt (10) mit einer der zweiten Außenmantelfläche (19) zugewandten zweiten Innenwand (16) und eine dieser abgewandten zweiten Außenwand (17) aufweist, dass die zweite Leiterplatte (8) zwischen der zweiten Innenwand (16) und der zweiten Außenwand (17) quer zur ersten Leiterplatte (7) angeordnet ist, dass zwischen der zweiten Innenwand (16) und der zweiten Außenmantelfläche (19) ein zweiter Luftspalt (18) gebildet ist, der in Umfangsrichtung des Stators für den Durchtritt von Konvektionsluft an beiden Enden offen ist, dass zwischen dem ersten Gehäuseabschnitt (9) und dem zweiten Gehäuseabschnitt (10) eine die erste Innenwand (12) mit der ersten Außenwand (13) verbindende Durchtrittsöffnung (23) für Kühlluft gebildet ist, und dass die Durchtrittsöffnung (23) in Axialrichtung des Rotors randoffen ausgestaltet ist.

2. Elektrischer Antrieb (1) nach Anspruch 1, **dadurch gekennzeichnet, dass** die Durchtrittsöffnung (23) schlitzförmig ausgebildet ist und sich in Axialrichtung des Elektromotors (2) vorzugsweise nur über einen Teil der Länge der Gehäuseabschnitte (10) erstreckt.

3. Elektrischer Antrieb (1) nach Anspruch 2, **dadurch gekennzeichnet, dass** die erste Leiterplatte (7) einen Durchbruch oder eine randoffene Aussparung aufweist, und dass die Durchtrittsöffnung (23) diesen Durchbruch oder diese Aussparung durchsetzt.

4. Elektrischer Antrieb (1) nach Anspruch 3, **dadurch gekennzeichnet, dass** die erste Leiterplatte (7) einen den Durchbruch oder die Aussparung begrenzenden stegförmigen Leiterplattenabschnitt (25) aufweist, welcher der zweiten Leiterplatte (7) zugewandt und über eine Steckkupplung (26) mit dieser elektrisch verbunden ist.

5. Elektrischer Antrieb (1) nach einem der Ansprüche 1 bis 4, **dadurch gekennzeichnet, dass** das Gehäuse einen dritten Gehäuseabschnitt (11) aufweist, der quer zur Rotationsachse (4) des Rotors angeordnet und einer Stirnwand des Elektromotors (2) zugewandt ist, und dass der dritte Gehäuseabschnitt (11) L-förmig mit dem ersten Gehäuseabschnitt (9) und/oder dem zweiten Gehäuseabschnitt (10) verbunden ist.

6. Elektrischer Antrieb (1) nach einem der Ansprüche 1 bis 5, **dadurch gekennzeichnet, dass** das Gehäuse einen dritten Gehäuseabschnitt (11) aufweist, der quer zur Rotationsachse (4) des Rotors angeordnet und als Motorflansch ausgestaltet ist, der von einer Welle, auf welcher der Rotor angeordnet ist, durchsetzt wird, und dass der dritte Gehäuseabschnitt (11) L-förmig mit dem ersten Gehäuseabschnitt (9) und/oder dem zweiten Gehäuseabschnitt (10) verbunden ist.

7. Elektrischer Antrieb (1) nach einem der Ansprüche 1 bis 6, **dadurch gekennzeichnet, dass** mindestens einer der Gehäuseabschnitte (9, 10, 11) von einem Luftdurchtrittskanal (24) durchsetzt ist.

8. Elektrischer Antrieb (1) nach Anspruch 7, **dadurch gekennzeichnet, dass** der Luftdurchtrittskanal (24) in Axialrichtung des Rotors verläuft.

9. Elektrischer Antrieb (1) nach einem der Ansprüche 7 oder 8, **dadurch gekennzeichnet, dass** der Luftdurchtrittskanal (24) in einem von dem ersten Gehäuseabschnitt (9) entfernten Randbereich des zweiten Gehäuseabschnitts (10) angeordnet ist.

10. Elektrischer Antrieb (1) nach einem der Ansprüche 1 bis 9, **dadurch gekennzeichnet, dass** das Steuer- und/oder Logikmodul (3) an einer dem Elektromotor (2) abgewandten Rückseitenwand des dritten Gehäuseabschnitts (11) elektrische Anschlüsse (22) zum lösbaren Verbinden mit Stromversorgungs-, Steuerungs- und/oder Kommunikationsleitungen aufweist.

11. Elektrischer Antrieb (1) nach einem der Ansprüche 1 bis 10, **dadurch gekennzeichnet, dass** die erste Außenwand (13) derart thermisch leitend mit der ersten Innenwand (12) verbunden ist, dass zwischen der ersten Außenwand (13) und der ersten Innenwand (12) ein erster thermischer Widerstand vorhanden ist, dass die zweite Außenwand (17) derart thermisch leitend mit der zweiten Innenwand (16) verbunden ist, dass zwischen der zweiten Außenwand (17) und der zweiten Innenwand (16) ein zweiter thermischer Widerstand vorhanden ist, dass auf der ersten Leiterplatte (7) eine erste elektrische Schaltung und auf der zweiten Leiterplatte (8) eine zweite elektrische Schaltung vorgesehen sind, dass die elektrischen Schaltungen für unterschiedliche, maximal zulässige Betriebstemperaturen ausgelegt sind, und dass die Leiterplatte (7, 8), auf der die elektrische Schaltung mit der geringeren maximal zulässigen Betriebstemperatur vorgesehen ist, hinter der Außenwand (13, 17) angeordnet ist, welche den höheren thermischen Widerstand zu der ihr zugeordneten Innenwand (12, 16) hat.

## Claims

1. Electric drive (1) comprising an electric motor (2), which has a stator and a rotor, and comprising a control and/or logic module (3) for the electric motor (2), which control and/or logic module has a first printed circuit board (7) and a second printed circuit board (8) which are arranged parallel to the rotation axis (4) of the rotor, wherein the first printed circuit board (7) covers a first outer casing surface (15) of the stator and the second printed circuit board (8) covers a second outer casing surface (19) of the stator, comprising a housing which has a first housing section (9) with a first inner wall which faces the first outer casing surface (15) and a first outer wall (13) which is averted from the said outer casing surface, wherein the first printed circuit board (7) is arranged between the first inner wall (12) and the first outer wall (13), wherein a first air gap (14) is formed between the first inner wall (12) and the first outer casing surface (15), which air gap is open at both ends in the circumferential direction of the stator to allow convection air to pass through, **characterized in that** the housing has a second housing section (10) which is arranged transverse to the first printed circuit board (7) and has a second inner wall (16) which faces the second outer casing surface (19) and a second outer wall (17) which is averted from the said second outer casing surface, **in that** the second printed circuit board (8) is arranged between the second inner wall (16) and the second outer wall (17) transverse to the first printed circuit board (7), **in that** a second air gap (18) is formed between the second inner wall (16) and the second outer casing surface (19) and is open at both ends in the circumferential direction of the stator to allow convection air to pass through, **in that** a passage opening (23) for cooling air, which passage opening connects the first inner wall (12) to the first outer wall (13), is formed between the first housing section (9) and the second housing section (10), and **in that** the passage opening (23) is designed with an open edge in the axial direction of the rotor.

2. Electric drive (1) according to Claim 1, **characterized in that** the passage opening (23) is of slot-like design and preferably extends only over a portion of the length of the housing section (10) in the axial direction of the electric motor (2).

3. Electric drive (1) according to Claim 2, **characterized in that** the first printed circuit board (7) has an aperture or a cutout with an open edge, and **in that** the passage opening (23) passes through this aperture or this cutout.

4. Electric drive (1) according to Claim 3, **characterized in that** the first printed circuit board (7) has a web-like printed circuit board section (25) which delimits the aperture or the cutout, faces the second printed circuit board (7) and is electrically connected to the said second printed circuit board by means of a plug coupling (26).

5. Electric drive (1) according to one of Claims 1 to 4, **characterized in that** the housing has a third housing section (11) which is arranged transverse to the rotation axis (4) of the rotor and faces an end wall of the electric motor (2), and **in that** the third housing section (11) is connected in an L-shaped manner to the first housing section (9) and/or to the second housing section (10).

6. Electric drive (1) according to one of Claims 1 to 5, **characterized in that** the housing has a third housing section (11) which is arranged transverse to the rotation axis (4) of the rotor and is designed as a motor flange through which a shaft on which the rotor is arranged passes, and **in that** the third housing section (11) is connected in an L-shaped manner to the first housing section (9) and/or to the second housing section (10).

7. Electric drive (1) according to one of Claims 1 to 6, **characterized in that** an air passage channel (24) passes through at least one of the housing sections (9, 10, 11).

8. Electric drive (1) according to Claim 7, **characterized in that** the air passage channel (24) runs in the axial direction of the rotor.

9. Electric drive (1) according to either of Claims 7 and 8, **characterized in that** the air passage channel (24) is arranged in an edge region of the second housing section (10), which edge region is at a distance from the first housing section (9).

10. Electric drive (1) according to one of Claims 1 to 9, **characterized in that** the control and/or logic module (3) has electrical connections (22) for releasable connection to power supply, control and/or communication lines on a rear side wall of the third housing section (11), which rear side wall is averted from the electric motor (2).

11. Electric drive (1) according to one of Claims 1 to 10, **characterized in that** the first outer wall (13) is thermally conductively connected to the first inner wall (12) in such a way that there is a first thermal resistance between the first outer wall (13) and the first inner wall (12), **in that** the second outer wall (17) is thermally conductively connected to the second inner wall (16) in such a way that there is a second thermal resistance between the second outer wall (17) and the second inner wall (16), **in that** a first electrical circuit is provided on the first printed circuit board (7) and a second electrical circuit is provided on the second printed circuit board (8), **in that** the electrical circuits are designed for different, maximum permissible operating temperatures, and **in that** the printed circuit board (7, 8) on which the electrical circuit with the lower maximum permissible operating temperature is provided is arranged behind the outer wall (13, 17) which has the higher thermal resistance to the inner wall (12, 16) which is associated with it.

## Revendications

1. Dispositif d'entraînement électrique (1) muni d'un moteur électrique (2) comportant un stator et un rotor et d'un module de commande et/ou logique (3) destiné au moteur électrique (2), qui comporte une première carte de circuit imprimé (7) et une deuxième carte de circuit imprimé (8) disposées parallèlement à l'axe de rotation (4) du rotor, dans lequel la première carte de circuit imprimé (7) recouvre une première surface d'enveloppe extérieure (15) du stator et dans lequel la deuxième carte de circuit imprimé (8) recouvre une deuxième surface d'enveloppe extérieure (19) du stator, comprenant un boîtier qui comporte une première partie de boîtier (9) ayant une première paroi intérieure (12) faisant face à la première surface d'enveloppe extérieure (15) et une première paroi extérieure (13) tournée à l'opposé de celle-ci, dans lequel la première carte de circuit imprimé (7) est disposée entre la première paroi intérieure (12) et la première paroi extérieure (13), dans lequel un premier interstice d'air (14) est formé entre la première paroi intérieure (12) et la première surface d'enveloppe extérieure (15), lequel interstice d'air est ouvert aux deux extrémités dans la direction circonférentielle du stator pour le passage d'air de convexion, **caractérisé en ce que** le boîtier comporte une deuxième partie de boîtier (10) disposée transversalement à la première carte de circuit imprimé (7), comprenant une deuxième paroi intérieure (16) faisant face à la deuxième surface d'enveloppe extérieure (19) et une deuxième paroi extérieure (17) tournée en sens opposé à celle-ci, **en ce que** la deuxième carte de circuit imprimé (8) est disposée entre la deuxième paroi intérieure (16) et la deuxième paroi extérieure (17) transversalement à la première carte de circuit imprimé (7), entre ce qu'un deuxième interstice d'air (18) est formé entre la deuxième paroi intérieure (16) et la deuxième surface d'enveloppe extérieure (19), lequel interstice d'air est ouvert aux deux extrémités dans la direction circonférentielle du stator pour le passage d'air de convexion, **en ce qu'**une ouverture de passage (23) reliant la première paroi intérieure (12) à la première paroi extérieure (13) est formée entre la première partie de boîtier (9) et la deuxième partie de boîtier (10) pour de l'air de refroidissement, et **en ce que** l'ouverture de passage (23) est conçue pour s'ouvrir circonférentiellement dans la direction axiale du rotor.

2. Dispositif d'entraînement électrique (1) selon la revendication 1, **caractérisé en ce que** l'ouverture de passage (23) est réalisée sous la forme d'une fente et **en ce qu'**elle s'étend dans la direction axiale du moteur électrique (2), de préférence uniquement sur une partie de la longueur de la partie de boîtier (10).

3. Dispositif d'entraînement électrique (1) selon la revendication 2, **caractérisé en ce que** la première carte de circuit imprimé (7) présente une traversée ou un évidement s'ouvrant sur le bord, et **en ce que** l'ouverture de passage (23) traverse ladite traversée ou ledit évidement.

4. Dispositif d'entraînement électrique (1) selon la revendication 3, **caractérisé en ce que** la première carte de circuit imprimé (7) comporte une partie de carte de circuit imprimé (25) en forme de tige adjacente à la traversée ou à l'évidement, laquelle partie de carte de circuit imprimé fait face à la deuxième carte de circuit imprimé (7) et est reliée électriquement à celle-ci par l'intermédiaire d'un raccord enfichable (26).

5. Dispositif d'entraînement électrique (1) selon l'une des revendications 1 à 4, **caractérisé en ce que** le boîtier comporte une troisième partie de boîtier (11) qui est disposée transversalement à l'axe de rotation (4) du rotor et fait face à une paroi avant du moteur électrique (2), et **en ce que** la troisième partie du boîtier (11) est reliée en L à la première partie de boîtier (9) et/ou à la deuxième partie de boîtier (10).

6. Dispositif d'entraînement électrique (1) selon l'une des revendications 1 à 5, **caractérisé en ce que** le boîtier comporte une troisième partie de boîtier (11) qui est disposée transversalement à l'axe de rotation (4) du rotor et est configurée sous la forme d'une bride de moteur qui est traversée par un arbre sur lequel est disposé le rotor, et **en ce que** la troisième partie du boîtier (11) est reliée en L à la première partie de boîtier (9) et/ou à la deuxième partie de boîtier (10).

7. Dispositif d'entraînement électrique (1) selon l'une des revendications 1 à 6, **caractérisé en ce qu'**au moins l'une des parties de boîtier (9, 10, 11) est traversée par un canal de passage d'air (24).

8. Dispositif d'entraînement électrique (1) selon la revendication 7, **caractérisé en ce que** le canal de passage d'air (24) s'étend dans la direction axiale du rotor.

9. Dispositif d'entraînement électrique (1) selon l'une des revendications 7 ou 8, **caractérisé en ce que** le canal de passage d'air (24) est disposé dans une zone périphérique de la deuxième partie de boîtier (10), qui est éloignée de la première partie de boîtier (9) .

10. Dispositif d'entraînement électrique (1) selon l'une des revendications 1 à 9, **caractérisé en ce que** le module de commande et/ou logique (3) comporte, sur une paroi arrière de la troisième partie de boîtier (11), tournée en direction opposée au moteur électrique (2), des bornes électriques (22) destinées à être reliées de manière amovible à des lignes d'alimentation en courant, de commande et/ou de communication.

11. Dispositif d'entraînement électrique (1) selon l'une des revendications 1 à 10, **caractérisé en ce que** la première paroi extérieure (13) est reliée de manière thermiquement conductrice à la première paroi intérieure (12) de manière à ce qu'une première résistance thermique soit présente entre la première paroi extérieure (13) et la première paroi intérieure (12), **en ce que** la deuxième paroi extérieure (17) est reliée de manière thermiquement conductrice à la deuxième paroi intérieure (16), **en ce qu'**une deuxième résistance thermique est présente entre la deuxième paroi extérieure (17) et la deuxième paroi intérieure (16), **en ce qu'**un premier circuit électrique est prévu sur la première carte de circuit imprimé (7) et **en ce qu'**un deuxième circuit électrique est prévu sur la deuxième carte de circuit imprimé (8), **en ce que** les circuits électriques sont conçus pour des températures de fonctionnement admissibles maximales différentes, et **en ce que** les cartes de circuit imprimé (7, 8) sur lesquelles est prévu le circuit électrique présentant la température de fonctionnement maximale admissible la plus faible sont disposées à l'arrière de la paroi extérieure (13, 17) qui présente la résistance thermique la plus élevée par rapport à la paroi intérieure (12, 16) qui lui est associée.
